# EUROPEAN PATENT APPLICATION

(11) **EP 3 859 629 A1**
(43) Date of publication of application: **04.08.2021**
(21) Application number: 20211203.3
(22) Date of filing: 02.12.2020
(51) Int. Cl.: G06Q 10/08, G06Q 50/28

(54) **A SYSTEM AND A METHOD FOR DETERMINING MISSING INFORMATION IN A BLOCKCHAIN NETWORK**

(30) Priority: 29.01.2020 IN 202011004026
(71) Applicant: Carrier Corporation, Palm Beach Gardens, FL 33418 (US)
(72) Inventor: N, Ananthakrishnan, 500081 Telangana (IN); BERTUCCELLI, Luca F., Beverly, MA 01915 (US); SANAGA, Pradeep Reddy, 500081 Telangana (IN); MANDA, Suresh, 500081 Telangana (IN); ANDREYEVA, Natalia, Beverly, MA 01915 (US)
(74) Representative: Dehns

(57) **Abstract**

A system (100) and a method (500) for determining missing information in a blockchain network (200) as described. The method comprising steps of verifying (504) information associated with parameters at each of a plurality of nodes (202, 204, 206, 208, 210, 212, 214, 216). Also, the information associated with the parameters of each of one or more items (116) are stored at the plurality of nodes in a blockchain network (200). The method further describes steps of determining (506) missing information associated with at least one parameter of the one or more items at each node of the plurality of nodes based on the verification.

## Description

The present invention generally relates to a supply chain. More particularly, the invention relates to a system and a method for determining missing information in a supply chain distribution system.

In storage and supply chain systems, one or more items are manufactured by a manufacturer at a manufacturing location and may be moved to several different locations (such as production location, packaging location etc.) till the items reach an end consumer. The items are required to be kept in a suitable environment (such as a desired temperature, humidity etc.) to keep content of the items fresh and to prevent the content of the items from getting stale. However, the items may be subjected to an unsuitable environment if different components controlling the environment are not functioning properly. This can adversely impact the content of the items and thereby, making the items unconsumable for the end consumer.

Moreover, the manufacturer may not know that the items are kept in the unsuitable environment. This would impose huge risk on life of the end consumer and the liability of the items would be solely on the manufacturer. Therefore, it is important that the manufacturer of the items have a clear visibility and fair knowledge about the environment in which the items are being kept till the time the items are delivered to the end consumer. Also, the manufacturer of the items should have complete knowledge about the environment being maintained for the items at every location and also during the transit. Existing solutions in the market do not provide complete information about the environment being maintained for the items at each and every location and during the transit.

In view of the afore-mentioned problems in the existing solutions, there is a need for an effective system and a method for providing information about an environment being maintained for items at each and every location and during transit.

Viewed from a first aspect, the invention provides a system as defined in claim 1 for determining missing information in a storage and supply chain system. The system comprises one or more items and a server. Each of the one or more items comprises a determination unit adapted to determine information associated with parameters for each of the one or more items and a transmitter adapted to transmit the information associated with the parameters to a node of to a plurality of nodes in a blockchain network. The server is communicably coupled with each of the plurality of nodes. The server comprises a verification unit adapted to verify the information at each of the plurality of nodes. The server further comprises a detection unit adapted to determine missing information associated with at least one parameter of the one or more items at each node of the plurality of nodes based on the verification.

Optionally, the missing information associated with the at least one parameter comprises temperature information, humidity information, and/or location information associated with temperature parameter, humidity parameter and/or location parameter of the one or more items.

Optionally, the server communicates with one or more neighboring nodes of the node and analyzes information associated with parameters of the one or more items at the one or more neighboring nodes for determining the missing information.

Optionally, each of the plurality of nodes comprises a smart contract, wherein the smart contract is associated with a pre-defined temperature threshold value and/or a pre-defined humidity threshold value for required maintaining each of the one or more items.

Optionally, the server transmits an alert to an entity associated with a particular node when temperature information and/or humidity information associated with the one or more items at the particular node goes below a pre-defined temperature threshold value and/or a pre-defined humidity threshold value.

Optionally, each of the plurality of nodes in the blockchain network corresponds to an entity involved in a supply chain system.

Optionally, the one or more items determines a respective node for transmitting the information associated with the parameters based on a location information of the one or more items. Further, the one or more items moves from one entity to another entity involved in a supply chain system.

Optionally, the information associated with the parameters comprises time information, location information, temperature information, humidity information and/or a unique identifier information.

Optionally, the parameters of the one or more items comprises a time parameter, a location parameter, a temperature parameter, a humidity parameter and/or a unique identifier parameter of the one or more items.

Viewed from a second aspect, the invention provides a method as defined in claim 11 for determining missing information in a blockchain network. The method comprises steps of verifying information associated with parameters at each of a plurality of nodes. Also, the information associated with the parameters of each of one or more items are stored at the plurality of nodes in a blockchain network. The method also comprises steps of determining missing information associated with at least one parameter of the one or more items at each node of the plurality of nodes based on the verification.

Optionally, the missing information associated with the at least one parameter comprises temperature information, humidity information and/or location information associated with temperature parameter, humidity parameter and/or location parameter of the one or more items.

Optionally, the server communicates with one or more neighboring nodes of the node and analyzes information associated with parameters of the one or more items at the one or more neighboring nodes for determining the missing information.

Optionally, each of the plurality of nodes comprises a smart contract. Also, the smart contract is associated with a pre-defined temperature threshold value and/or a pre-defined humidity threshold value for required maintaining each of the one or more items.

Optionally, the server transmits an alert to an entity associated with a particular node when temperature information and/or humidity information associated with the one or more items at the particular node goes below a pre-defined temperature threshold value and/or a pre-defined humidity threshold value.

Optionally, each of the plurality of nodes in the blockchain network corresponds to an entity involved in a supply chain system.

Optionally, the one or more items determines the information associated with the parameters and transmits the information associated with the parameters to a respective node in the blockchain network.

Optionally , the one or more items determines a respective node for transmitting the information associated with the parameters based on a location information of the one or more items. Also, the one or more items moves from one entity to other entity involved in a supply chain system.

Optionally, the information associated with the parameters comprises time information, location information, temperature information, humidity information and/or a unique identifier information. Also, the parameters of the one or more items comprises a time parameter, a location parameter, a temperature parameter, a humidity parameter and/or a unique identifier parameter of the one or more items.

In a further aspect, the invention provides a computer readable medium which may be for determining missing information in a blockchain network. The computer readable medium comprises instructions executable by a computer processor in order to configure the processor to carry out the method of the second aspect as well as optionally any optional feature thereof. The computer readable medium may comprise one or more processors and a memory may be coupled to the one or more processors, where the memory stores the instructions that, in use, are executed by the one or more processors. The one or more processors are configured by the instructions to verify information associated with parameters at each of a plurality of. The information associated with the parameters of each of one or more items are stored at the plurality of nodes in a blockchain network. The one or more processors are further configured to determine missing information associated with at least one parameter of the one or more items at each node of the plurality of nodes based on the verification.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

Other aspects, advantages, and salient features of the invention will become apparent to those skilled in the art from the following detailed description, which taken in conjunction with the annexed drawings, discloses exemplary embodiments of the invention.
Figure 1 depicts an exemplary system architecture.
Figure 2 depicts exemplary nodes corresponding to various exemplary entities in a blockchain network.
Figure 3 depicts a block diagram of different components of an exemplary item.
Figure 4 depicts a block diagram of different components of an exemplary server.
Figure 5 depicts an exemplary flowchart illustrating a method to perform the invention.

Corresponding reference numerals indicate corresponding parts throughout the drawings.

Described herein is the technology with a system and a method for determining missing information in a storage and supply chain system. One or more items may move from one location to another location in a supply chain activity. These one or more items may determine information associated with parameters of the one or more items and may also transmit the information associated with the parameters to a node of the plurality of nodes in a blockchain network. Each of the plurality of nodes in the blockchain network may correspond to an entity involved in the supply chain system and may comprise a smart contract. Such an entity may be a manufacturing entity, a storage entity, a production entity, a packaging entity, a distribution entity, a retailer entity and/or a transportation entity. Whenever the one or more items reach at any of these entity or are in transit to reach from one entity to another entity, then the one or more items may determine and transmit the information to a respective node of the plurality of nodes. A respective node for transmitting the information may be determined based on a location of the one or more items. For an instance, if the one or more items are at a location of the manufacturing entity, the one or more items may determine and transmit the information to a node relevant to the manufacturing entity node and if the one or more items are in transit, then the one or more items may determine and transmit the information to a transportation entity node.

Furthermore, a server may be communicably coupled with each of the plurality of nodes to verify the information at each of the plurality of nodes. The information is received from each of the one or more items present at a location or in transit. Also, the server may determine any missing information associated with any/at least one parameter of the one or more items at any node from the plurality of nodes based on the verification of the information present at each node. Accordingly, each of the one or more items may be monitored in the complete supply chain at any location and even during transit.

As used herein, the one or more items may have capability to sense parameters and determine the information associated with the parameters of the one or more items. The one or more items may also have capability to transmit the information associated with the parameters to the server through a network. Also, the one or more items may include content for consumption or usage by an end customer. Such item may be a bottle or a box having liquid content, solid content or semi solid content or any such item known in the art. The content in the item may be for any kind of consumption/usage and may be a pharmaceutical content, a liquid content, an eatable content, a lotion, a cream, tablets or any such content known in the art.

As used herein, the information associated with parameters of the one or more items may refer to time information associated with time parameter, location information associated with location parameter, temperature information associated with temperature parameter, humidity information associated with humidity parameter, light information associated with light parameter, a unique identifier information associated with unique identifier parameter of the one or more items and/or any such information that is obvious to a person skilled in the art.

As used herein, the server has processing capabilities as disclosed further in the specification. The server may be a cloud storage, a remote database, or any such storage known in the art.

As used herein, the network may refer to a wired network, a mesh network, a cellular network (such as Global System for Mobile (GSM) network, a Long-Term Evolution (LTE) network, a code-division multiple access (CDMA) network, a narrow-band internet of thing (NB-IoT) technique or category M1 technique)), a short-range network (a WiFi network, a ZigBee network, a bluetooth network, or a near-field communication technique) or any such network/technique that is known in the art.

Throughout the specification, reference numeral 116 depicts different items. Each of the reference numerals 116A, 116B, 116C, 116D, 116E, 116F may be considered as a separate item.

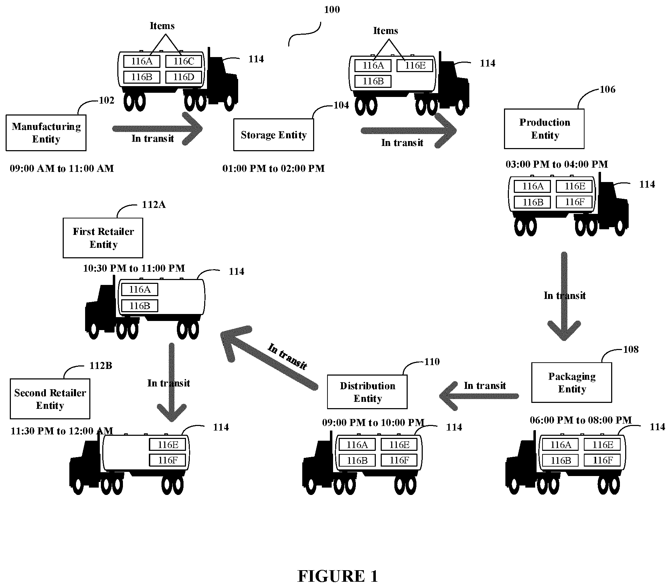

Figure 1 depicts an exemplary system architecture 100. As can be seen in Figure 1, a manufacturing entity 102 may be situated at a location where one or more items 116A, 116B, 116C, 116D may be manufactured by a manufacturer. The one or more items 116A, 116B, 116C, 116D may be kept from 09:00 AM to 11:00 AM at the location of the manufacturing entity 102. Then at 11:00 AM, the one or more items 116A, 116B, 116C, 116D may be transported from the location of the manufacturing entity 102 to a location of a storage entity 104 via a container 114. The container 114, in transit, may take 2 hours from the location of the manufacturing entity 102 to reach the location of the storage entity 104 at 01:00 PM. Also at the storage entity 104, the one or more items 116C and 116D have been kept for storage at the storage entity 104 and other item 116E along with the items 116A and 116B may be transported at 02:00 PM from the location of the storage entity to a location of a production entity 106 via the container 114. The container 114 may take 1 hour from the location of the storage entity 104 to reach the location of the production entity 106 at 03:00 PM. At the production entity 106, one more item 116F may be picked up along with the items 116A, 116B and 116E. At 04:00 PM, the container 114 (having items 116A, 116B, 116E and 116F) may move from the location of the production entity 106 and may proceed to reach a location of a packaging entity 108. The container 114 may take 2 hour from the location of the production entity 106 to reach the location of the packaging entity 108 at 06:00 PM. At the packaging entity 108, the items 116A, 116B, 116E and 116F may be kept from 06:00 PM to 08:00 PM for packaging these items. Then at 08:00 PM, the container 114 (having items 116A, 116B, 116E and 116F) may proceed to a location of a distribution entity 110 and may take 1 hour to reach the distribution entity 110 by 09:00 PM. At the distribution entity 110, the items 116A, 116B, 116E and 116F may be kept from 09:00 PM to 10:00 PM for arranging the distribution of items. At 10:00 PM, the container 114 may proceed from the location of the distribution entity 110 to a location of a first retailer entity 112A and may reach the first retailer entity 112A by 10:30 PM. Here, the items 116A, 116B may be delivered at the first retailer entity 112A. Then, from the first retailer entity 112A at 11:00 AM, the container 114 may proceed to location of a second retailer entity 112B and may reach the second retailer entity 112B by 11:30 PM. Here, the items 116E, 116F may be delivered at the second retailer entity 112B.

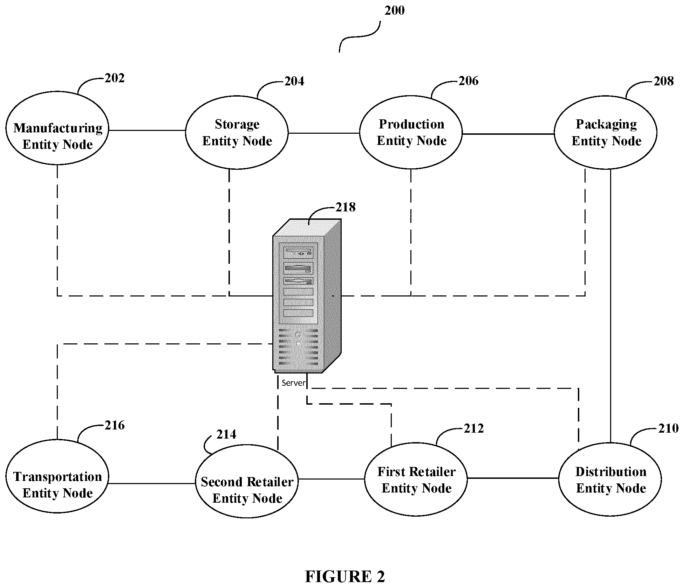

From the location of the manufacturing entity 102 till the location of the second retailer entity 112B, each of the one or more items 116 may sense parameter/s and may determine information associated with the parameter/s based on the sensing of the parameter/s. For this, each of the one or more items 116 may have one or more sensors to sense the parameter/s and may determine information associated with the parameter/s. Further, each of the one or more items 116 may transmit the information associated with the parameter/s to a respective node corresponding to an entity (explained in Figure 2) through a network. In an exemplary embodiment, each of the one or more items 116 may determine and transmit the information to the respective node in a periodic manner. For an instance, each of the one or more items 116 may determine and transmit the information to the respective node in every 30 minutes. In an exemplary alternative embodiment, each of the one or more items 116 may determine and transmit the information to the respective node based on an event. For an instance, each of the one or more items 116 may determine and transmit the information to the respective node when the respective node transmits a request to each of the one or more items 116 for such information. Exemplary Table 1 below depicts the information associated with the parameter/s transmitted to the respective node by the item 116A.

**Table 1**

| **Parameter** | **Information Associated with the Parameter of the Item 116A** |
|---|---|
| Time Parameter | 2019-12-30; 11:00 AM |
| Location Parameter | Latitude - 89.25 and Longitude - 23.45 |
| Temperature Parameter | 11.5 °Celsius |
| Humidity Parameter | 54 Grams per cubic metre or Grams per kilogram |
| Unique Identifier Parameter | 116A |
| Light Parameter | 0 Candela |

As depicted in exemplary Table 1 above, the item 116A may sense parameter/s such as a time parameter, a location parameter, a temperature parameter, a humidity parameter, a light parameter and/or a unique identifier parameter of the item 116A. Based on the sensing of the parameter/s, the item 116A may determine "2019-12-30; 11:00 AM" as information associated with the time parameter, "Latitude - 89.25 and Longitude - 23.45" as information associated with the location parameter, "11.5 °Celsius" as information associated with the temperature parameter, "54 Grams per cubic metre or Grams per kilogram" as information associated with the humidity parameter, "116A" as information associated with the unique identifier parameter, and/or "0 Candela" as information associated with the light parameter. Similarly, each of the one or more items 116 may determine and transmit to the respective node such information associated with the parameter/s. Although the Figure 1 depicts only one container 114 moving from the manufacturing entity 102 till the second retailer entity 112B; however; it is understood for a person skilled in the art that there can be more than one container which may be used in the whole supply chain system 100 to deliver the item 116 from a location of one entity to another location of different entity.

Figure 2 depicts exemplary nodes corresponding to various exemplary entities in a blockchain network according to an exemplary embodiment of the invention. As explained in Figure 1 above, each of the one or more items 116 may be either stored or in transit from one entity to another entity. Each of these entities may have a corresponding node in a blockchain network 200. As depicted in Figure 2, a manufacturing entity node 202 may be a corresponding node to the manufacturing entity 102. Also, a storage entity node 204 may be a corresponding node to the storage entity 104 and a production entity node 206 may be a corresponding node to the production entity 106. Further, a packaging entity node 208 may be a corresponding node to the packaging entity 108 and a distribution entity node 210 may be a corresponding node to the distribution entity 110. Similarly, a first retailer entity node 212 may be a corresponding node to the first retailer entity 112A and a second retailer entity node 214 may be a corresponding node to the second retailer entity 112B. Further, a transportation entity node 216 may be a corresponding node to the container 114.

The one or more items 116 may determine a respective node in the blockchain network 200 based on a location information of the one or more items 116. For an instance, the item 116A may determine its respective node based on the location information of the item 116A. Similarly, other items may determine its respective node based on its own location information. When the one or more items 116 determines the information associated with the parameter/s and the respective node, the one or more items 116 may transmit the information associated with the parameter/s to the respective node through a network. For an example and as depicted in Figure 1 and Figure 2, when the item 116C is present at the location of the manufacturing entity 102, the item 116C may determine its respective node as the manufacturing entity node 202 and may transmit the information to the manufacturing entity node 202. When the item 116C is in transit from the location of the manufacturing entity 102 to the location of the storage entity 104, the item 116C may determine its respective node as the transportation entity node 216 and may transmit the information to the transportation entity node 216. When the item 116C is at the location of the storage entity 104, the item 116C may determine its respective node as the storage entity node 204 and may transmit the information to the storage entity node 204.

Further, each of the manufacturing entity node 202, the storage entity node 204, the production entity node 206, the packaging entity node 208, the distribution entity node 210, the first retailer entity node 212, the second retailer entity node 214 and the transportation entity node 216 comprises a smart contract. The smart contract stored at each node comprises a list of the parameter/s (as discussed explained above in exemplary Table 1) for which the information should be received from the each of the one or more items 116. The smart contract may be associated with a pre-defined temperature threshold value and/or a pre-defined humidity threshold value for maintaining each of the one or more items 116. As used herein, the pre-defined temperature threshold value and/or the pre-defined humidity threshold value may be minimum values required to maintain/keep the one or more items 116 and may be defined by the manufacturer of the one or more items 116.

Moreover, a server 218 may be communicably coupled with each of the manufacturing entity node 202, the storage entity node 204, the production entity node 206, the packaging entity node 208, the distribution entity node 210, the first retailer entity node 212, the second retailer entity node 214 and the transportation entity node 216. Also, the server 218 may verify the information received from each of the one or more items 116 based on the smart contract at each node. For this, the server 218 may verify if the information associated with each parameter (as discussed explained above in exemplary Table 1) has been received at each node from each of the one or more items 116. Based on the verification, the server 218 may identify missing information associated with any/at least one parameter of the one or more items 116 at each node of the plurality of nodes. When the server 218 identifies that there is a missing information at each node of the plurality of nodes, then the server 218 may determine the missing information at the particular node based on the information available/present at other neighboring nodes. There may be a scenario when there is no missing information at any node determined by the server 218 or in other words, the information associated with the parameters are complete and available at its respective node. Such a scenario is also within the scope of the present invention.

For determining the missing information, the server 218 may communicate with one or more neighboring nodes of the node and analyzes information associated with the parameter of the one or more neighboring nodes. As used herein, the missing information at the particular node may comprise temperature information associated with the temperature parameter, humidity information associated with the humidity parameter, and/or location information associated with the location parameter of the one or more items 116. This has been explained with examples provided below.

Consider an example with reference to Figure 1, temperature information associated with the temperature parameter has been missing at the production entity node 206 from 03:00 PM to 04:00 PM as the temperature information has not been received from the item 116A when the item 116A was at the production entity 106. In such a situation, the server 218 may communicate with the transportation entity node 216 as the other items 116B 116E and 116F were inside the container 114 and all were present at the location of the production entity node 206 from 03:00 PM to 04:00 PM. Based on the temperature information associated with the temperature parameter of the other items 116B 116E and 116F inside the container 114, the server 218 may determine the temperature information associated with the temperature parameter of the item 116A. For an instance, the temperature information at the transportation entity node 216 from other items 116B 116E and 116F is 12 °Celsius, then, the server 218 may determine the missing temperature information associated with the temperature parameter of the item 116A as 12 °Celsius. Alternatively, the server 218 may communicate with the storage entity node 204 as the item 116A was at the storage entity 104 from 01:00 PM to 02:00 PM and with the transportation entity node 216 as the item 116A was in transit from 02:00 PM to 03:00 PM to determine the temperature information associated with the temperature parameter of the item 116A. Based on the temperature information associated with the temperature parameter of the item 116A at the storage entity node 204 from 01:00 PM to 02:00 PM and at the transportation entity node 216 from 02:00 PM to 03:00 PM, the server 218 may determine/derive the temperature information associated with the temperature parameter of the item 116A. For an instance, the temperature information at the storage entity node 204 from 01:00 PM to 02:00 PM is 12 °Celsius and at the transportation entity node 216 from 02:00 PM to 03:00 PM is 14 °Celsius. Then, the server 218 may determine the missing temperature information associated with the temperature parameter of the item 116A as 13.6 °Celsius. This embodiment of the invention provides a technical advantage of identifying the missing information in the supply chain to check if the items 116 are kept in a suitable environment and of providing complete knowledge/visibility of the items 116 to the manufacturer.

The present invention also encompasses the server 218 to determine any anomaly at each node (using the smart contract of that node) by comparing the temperature information and/or the humidity information of the one or more items 116 with the pre-defined temperature threshold value and/or the pre-defined humidity threshold value. And if the temperature information and/or the humidity information of the one or more items 116 goes below the pre-defined temperature threshold value and/or the pre-defined humidity threshold value, the server 218 may transmit an alert to a respective entity (corresponding to the node at which the anomaly is determined) and/or the manufacturer of the one or more items 116. This embodiment of the invention provides a technical advantage of using smart contract to take further actions to find alternative methods to back up the missing information and of alerting the manufacturer about the items on time.

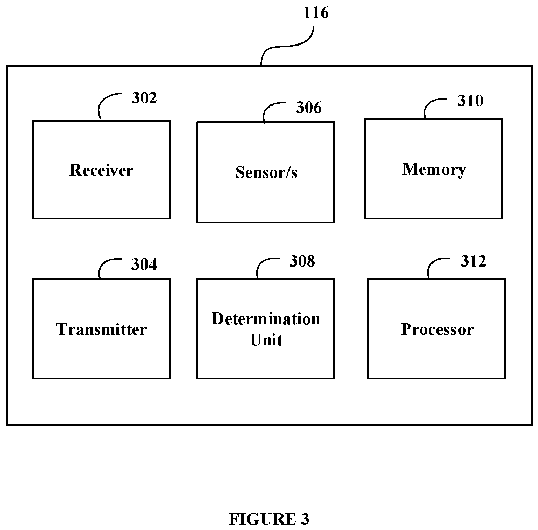

Figure 3 depicts a block diagram of different components of an exemplary item 116 according to an exemplary embodiment of the invention. The item 116 may comprise of, but is not limited to, a receiver 302, a transmitter 304, sensor/s 306, a determination unit 308, a memory 310 and/or a processor 312. In an exemplary embodiment, the sensor 306 may be a temperature sensor adapted to sense temperature parameter, a humidity sensor adapted to sense humidity parameter, a light sensor adapted to sense light parameter and/or a location sensor adapted to sense location parameter of the item 116. The sensor/s 306 may communicate the sensed parameter to the determination unit 308 and the determination unit 308 may be adapted to determine information associated with the parameter/s. The determination unit 308 may communicate the information associated with the parameter/s to the transmitter 304. The transmitter 304 may be adapted to transmit the information associated with the parameter/s to a respective node through a network (as explained above). The receiver 302 may be adapted to receive a request from a respective node through the network. The memory 310 may be adapted to store the information associated with the parameter/s.

Moreover, the receiver 302, the transmitter 304, the sensor/s 306, the determination unit 308, and/or the memory 310 may be communicably coupled with the processor 312. The different units described herein are exemplary. The invention may be performed using one or more units. For example, the tasks executed by the receiver 302, the transmitter 304, the sensor/s 306, the determination unit 308, the memory 310 and/or the processor 312 may be performed by a single unit. Alternatively more number of units as described herein may be used to perform the present invention.

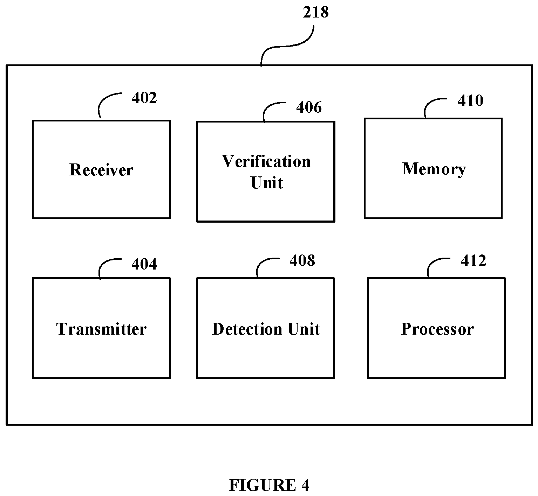

Figure 4 depicts a block diagram of different components of an exemplary server 218 according to an exemplary embodiment of the invention. The server 218 may comprise of, but is not limited to a receiver 402, a transmitter 404, a verification unit 406, a detection unit 408, a memory 410 and/or a processor 412. The transmitter 404 may be adapted to transmit a request to each node for providing information associated with parameter/s of each of the one or more items 116. The receiver 402 may be adapted to receive the information associated with parameter/s of each of the one or more items 116 from each node. The verification unit 406 may be adapted to verify the information at each of the nodes (as explained in Figure 1 and Figure 2 above). The detection unit 408 may be adapted to determine missing information associated with at least one parameter/s of the one or more items 116 at each node of the plurality of nodes based on the verification (as explained in Figure 1 and Figure 2 above). The memory 410 may be adapted to store the missing information and any such other information.

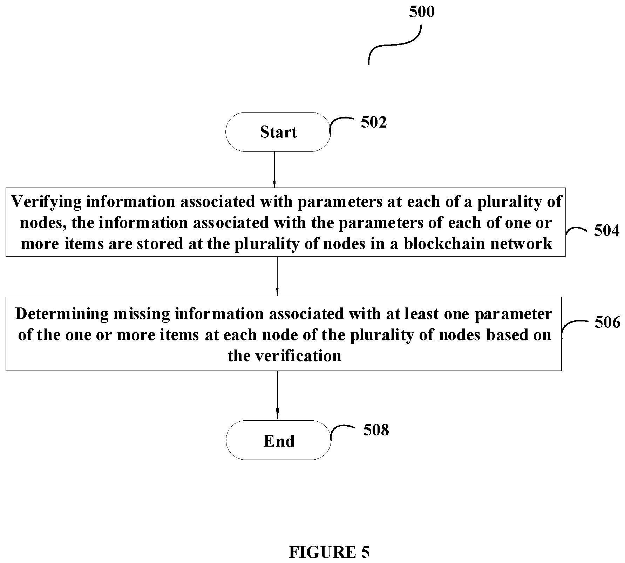

Moreover, the receiver 402, the transmitter 404, the verification unit 406, the detection unit 408, and/or the memory 410 may be communicably coupled with the processor 412. The different units described herein are exemplary. The invention may be performed using one or more units. For example, the tasks executed by the receiver 402, the transmitter 404, the verification unit 406, the detection unit 408, the memory 410 and/or the processor 412 may be performed by a single unit. Alternatively more number of units as described herein may be used to perform the present invention. Figure 5 depicts a flowchart outlining the features of the invention in an exemplary embodiment of the invention. The method flowchart 500 describes a method being for determining missing information in a blockchain network. The method flowchart 500 starts at step 502.

At step 504, a server 218 may verify information associated with parameters at each of a plurality of nodes. The information associated with the parameter of each of one or more items 116 are stored at the plurality of nodes in a blockchain network 200. This has been explained in details in Figure 1, Figure 2 and Table 1 above.

At step 506, the server 218 may determine missing information associated with at least one parameter of the one or more items 116 at each node of the plurality of nodes based on the verification. This has been explained in details in Figure 1, Figure 2 and Table 1 above. Then, the method flowchart 500 may end at 508.

The present invention is applicable in any industry/field that is well known in the art and where a smart contract is required. The embodiments of the invention discussed herein are exemplary and various modification and alterations to a person skilled in the art are within the scope of the invention, as defined by the claims.

In one embodiment of the invention, the invention can be operated using the one or more computer readable devices. The one or more computer readable devices can be associated with a server 218. A computer readable medium comprises one or more processors and a memory coupled to the one or more processors, the memory stores instructions executed by the one or more processors. The one or more processors configured to verify information associated with parameters at each of a plurality of nodes. Also, the information associated with the parameters of each of one or more items 116 are stored at the plurality of nodes in a blockchain network 200. The one or more processors configured to determine missing information associated with at least one parameter of the one or more items 116 at each node of the plurality of nodes based on the verification.

Exemplary computer readable media includes flash memory drives, digital versatile discs (DVDs), compact discs (CDs), floppy disks, and tape cassettes. By way of example and not limitation, computer readable media comprise computer storage media and communication media. Computer storage media include volatile and nonvolatile, removable and non-removable media implemented in any method or technology for storage of information such as computer readable instructions, data structures, program modules or other data. Computer storage media are tangible and mutually exclusive to communication media. Computer storage media are implemented in hardware and exclude carrier waves and propagated signals. Computer storage media for purposes of this invention are not signals *per se.* Exemplary computer storage media include hard disks, flash drives, and other solid-state memory. In contrast, communication media typically embody computer readable instructions, data structures, program modules, or other data in a modulated data signal such as a carrier wave or other transport mechanism and include any information delivery media.

Although described in connection with an exemplary computing system environment, examples of the invention are capable of implementation with numerous other general purpose or special purpose computing system environments, configurations, or devices.

Examples of the invention may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the invention may be implemented with any number and organization of such components or modules. For example, aspects of the invention are not limited to the specific computer-executable instructions or the specific components or modules illustrated in the Figures/Tables and described herein. Other examples of the invention may include different computer-executable instructions or components having more or less functionality than illustrated and described herein. Aspects of the invention transform a general-purpose computer into a special-purpose computing device when configured to execute the instructions described herein.

The order of execution or performance of the operations in examples of the invention illustrated and described herein is not essential, unless otherwise specified. That is, the operations may be performed in any order, unless otherwise specified, and examples of the invention may include additional or fewer operations than those disclosed herein. For example, it is contemplated that executing or performing a particular operation before, contemporaneously with, or after another operation is within the scope of aspects of the invention.

As it employed in the subject specification, the term "processor" can refer to substantially any computing processing unit or device comprising, but not limited to comprising, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Processors can exploit nano-scale architectures such as, but not limited to, molecular and quantum-dot based transistors, switches and gates, in order to optimize space usage or enhance performance of user equipment. A processor may also be implemented as a combination of computing processing units.

In the subject specification, terms such as "data store," "data storage," "database," "cache," and substantially any other information storage component relevant to operation and functionality of a component, refer to "memory components," or entities embodied in a "memory" or components comprising the memory. It will be appreciated that the memory components, or computer-readable storage media, described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). Additionally, the disclosed memory components of systems or methods herein are intended to comprise, without being limited to comprising, these and any other suitable types of memory.

When introducing elements of aspects of the invention or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C".

Having described aspects of the invention in detail, it will be apparent that modifications and variations are possible without departing from the scope of the invention as defined in the appended claims. As various changes could be made in the above constructions, products, and methods without departing from the scope of the claims, it is intended that all matter contained in the above description and shown in the accompanying drawings shall be interpreted as illustrative and not in a limiting sense.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

## Claims

1. A system (100) comprising:
- one or more items (116), each of the one or more items comprising:
a determination unit (308) adapted to determine information associated with parameters for each of the one or more items (116); and
a transmitter (304) adapted to transmit the information associated with the parameters to a node of a plurality of nodes (202, 204, 206, 208, 210, 212, 214, 216) in a blockchain network (200); and
- a server (218) communicably coupled with each of the plurality of nodes, the server comprising:
a verification unit (406) adapted to verify the information at each of the plurality of nodes; and
a detection unit (408) adapted to determine missing information associated with at least one parameter of the one or more items at each node of the plurality of nodes based on the verification.

2. The system of claim 1, wherein the missing information associated with the at least one parameter comprises temperature information, humidity information, and/or location information associated with temperature parameter, humidity parameter and/or location parameter of the one or more items (116).

3. The system of claim 1 or 2, wherein the server (218) communicates with one or more neighboring nodes (202, 204, 206, 208, 210, 212, 214, 216) of the node and analyzes information associated with parameters of the one or more items (116) at the one or more neighboring nodes for determining the missing information.

4. The system of claim 1, 2 or 3, wherein each of the plurality of nodes (202, 204, 206, 208, 210, 212, 214, 216) comprises a smart contract, wherein the smart contract is associated with a pre-defined temperature threshold value and/or a pre-defined humidity threshold value required for maintaining each of the one or more items (116).

5. The system of any preceding claim, wherein the server (218) transmits an alert to an entity associated with a particular node (202, 204, 206, 208, 210, 212, 214, 216) when temperature information and/or humidity information associated with the one or more items at the particular node goes below a pre-defined temperature threshold value and/or a pre-defined humidity threshold value.

6. The system of any preceding claim, wherein each of the plurality of nodes (202, 204, 206, 208, 210, 212, 214, 216) in the blockchain network (200) corresponds to an entity involved in a supply chain system.

7. The system of any preceding claim, wherein the one or more items (116) determines a respective node for transmitting the information associated with the parameters based on a location information of the one or more items.

8. The system of any preceding claim, wherein the one or more items (116) moves from one entity to another entity involved in a supply chain system.

9. The system of any preceding claim, wherein the information associated with the parameters comprises time information, location information, temperature information, humidity information and/or a unique identifier information.

10. The system of any preceding claim, wherein the parameters of the one or more items comprises a time parameter, a location parameter, a temperature parameter, a humidity parameter and/or a unique identifier parameter of the one or more items (116).

11. A method (500) comprising:
- verifying (504) information associated with parameters at each of a plurality of nodes (202, 204, 206, 208, 210, 212, 214, 216), the information associated with the parameters of each of one or more items (116) are stored at the plurality of nodes in a blockchain network (200); and
- determining (506) missing information associated with at least one parameter of the one or more items (116) at each node of the plurality of nodes (202, 204, 206, 208, 210, 212, 214, 216) based on the verification.

12. The method of claim 11, wherein the missing information associated with the at least one parameter, and/or the server, and/or the plurality of nodes are as claimed in any of claims 1 to 6.

13. The method of claim 11, wherein the one or more items, and/or the information associated with the parameters, and/or the paramters of the one or more items are as claimed in any of claims 7 to 10.

14. The method of claim 11, comprising the use of a system according to any of claims 1 to 10.

15. A computer readable medium comprising instructions for execution by one or more computer processors (312), in order to configure the one or more processors to carry out the method (500) as claimed in any of claims 11 to 14.
